# EUROPEAN PATENT APPLICATION

(11) **EP 4 503 475 A1**
(43) Date of publication of application: **05.02.2025**
(21) Application number: 22934133.4
(22) Date of filing: 30.03.2022
(51) Int. Cl.: H04B 7/22, H04W 84/12

(54) **WIRELESS COMMUNICATION METHOD AND APPARATUS**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2022/084215
(87) International publication number: WO 2023/184283

(57) **Abstract**

This application provides a wireless communication method and a wireless communications apparatus, to resolve a problem of obtaining, in that Wi-Fi system, a signal used for backscatter communication. The method includes: receiving, by a first device, a first PPDU frame from a second device, where at least a part of the first PPDU frame corresponds to a first signal, and the first signal is a signal used for backscatter communication.

## Description

### TECHNICAL FIELD

This application relates to the field of communication technologies, and more specifically, to a wireless communication method and a wireless communications apparatus.

### BACKGROUND

In recent years, application of zero-power devices has become increasingly wide. A zero-power device may perform communication based on a backscatter communication technology. In the backscatter communication technology, it is essential to obtain a signal (such as a carrier signal or an energy supply signal) used for backscatter communication. However, currently a solution to how to obtain, in a wireless fidelity (wireless fidelity, WiFi) system, a signal used for backscatter communication is still unavailable.

### SUMMARY

This application provides a wireless communication method and a wireless communications apparatus, to resolve a problem of obtaining, in a Wi-Fi system, a signal used for backscatter communication.

According to a first aspect, a wireless communication method is provided, and includes: receiving, by a first device, a first PPDU frame from a second device, where at least a part of the first PPDU frame corresponds to a first signal, and the first signal is a signal used for backscatter communication.

According to a second aspect, a wireless communication method is provided, and includes: transmitting, by a second device, a first PPDU frame to a first device, where at least a part of the first PPDU frame corresponds to a first signal, and the first signal is a signal used for backscatter communication.

According to a third aspect, a wireless communications apparatus is provided, where the apparatus is a first device, and the apparatus includes: a receiving unit, configured to receive a first PPDU frame from a second device, where at least a part of the first PPDU frame corresponds to a first signal, and the first signal is a signal used for backscatter communication.

According to a fourth aspect, a wireless communications apparatus is provided, where the apparatus is a second device, and the apparatus includes: a transmitting unit, configured to transmit a first PPDU frame to a first device, where at least a part of the first PPDU frame corresponds to a first signal, and the first signal is a signal used for backscatter communication.

According to a fifth aspect, a communications apparatus is provided, and includes a memory, a transceiver, and a processor, where the memory is configured to store a program, the processor performs data transmission and receiving through the transceiver, and the processor is configured to invoke the program in the memory to execute a method according to the first aspect or the second aspect.

According to a sixth aspect, a communications apparatus is provided, and includes a processor configured to invoke a program from a memory to execute a method according to the first aspect or the second aspect.

According to a seventh aspect, a chip is provided, and includes a processor configured to invoke a program from a memory to cause a device on which the chip is installed to execute a method according to the first aspect or the second aspect.

According to an eighth aspect, a computer-readable storage medium is provided, where the computer-readable storage medium stores a program, and the program causes a computer to execute a method according to the first aspect or the second aspect.

According to a ninth aspect, a computer program product is provided, and includes a program, where the program causes a computer to execute a method according to the first aspect or the second aspect.

According to a tenth aspect, a computer program is provided, where the computer program causes a computer to execute a method according to the first aspect or the second aspect.

A device in a Wi-Fi system generally performs communication based on a PPDU frame. In embodiments of this application, a PPDU frame is designed, so that at least a part of the PPDU frame corresponds to a first signal (that is, a signal used for backscatter communication). For example, the PPDU frame provided in embodiments of this application can carry a signal used for backscatter communication, or can carry indication information related to the signal, to help the device in the Wi-Fi system obtain the signal used for backscatter communication.

### BRIEF DESCRIPTION OF DRAWINGS

FIG. 1 is a schematic diagram of a wireless communications system according to an embodiment of this application.
FIG. 2 is a schematic diagram of a zero-power communications system according to an embodiment of this application.
FIG. 3 is a schematic structural diagram of an energy harvesting module according to an embodiment of this application.
FIG. 4 is a schematic diagram of a backscatter communication principle according to an embodiment of this application.
FIG. 5 is a circuit diagram of a terminal device based on a resistive load modulation technology according to an embodiment of this application.
FIG. 6 is a schematic diagram of a Wi-Fi communications system according to an embodiment of this application.
FIG. 7 is a schematic diagram of a PPDU frame structure according to an embodiment of this application.
FIG. 8 is a schematic structural diagram of a MAC layer related field according to an embodiment of this application.
FIG. 9 is a schematic structural diagram of a frame control field according to an embodiment of this application.
FIG. 10 is a schematic structural diagram of an NDP frame according to an embodiment of this application.
FIG. 11 is a schematic structural diagram of a signal field of an NDP frame according to an embodiment of this application.
FIG. 12 is a schematic flowchart of a wireless communication method according to an embodiment of this application.
FIG. 13 is a schematic structural diagram of a signal field according to an embodiment of this application.
FIG. 14 is a schematic structural diagram of a signal field that carries first information according to an embodiment of this application.
FIG. 15 is a schematic structural diagram of a first PPDU frame that carries a first signal according to an embodiment of this application.
FIG. 16 is a schematic structural diagram of another first PPDU frame that carries a first signal according to an embodiment of this application.
FIG. 17 is a schematic structural diagram of still another first PPDU frame that carries a first signal according to an embodiment of this application.
FIG. 18 is a schematic structural diagram of yet another first PPDU frame that carries a first signal according to an embodiment of this application.
FIG. 19 is a schematic structural diagram of still yet another first PPDU frame that carries a first signal according to an embodiment of this application.
FIG. 20 is a schematic structural diagram of a wireless communications apparatus according to an embodiment of this application.
FIG. 21 is a schematic structural diagram of another wireless communications apparatus according to an embodiment of this application.
FIG. 22 is a schematic structural diagram of a communications apparatus according to an embodiment of this application.

### DESCRIPTION OF EMBODIMENTS

The following describes the technical solutions in this application with reference to the accompanying drawings.

With development of wireless communication technologies, people hope that a wireless communications system is integrated with various vertical industries such as logistics, manufacturing, transportation, and energy. For example, a wireless communications system may be integrated with an industrial wireless sensor network (industrial wireless sensor network, IWSN). For another example, a wireless communications system may be integrated with smart logistics or smart warehousing. For still another example, a wireless communications system may be integrated with a smart home network.

However, in these industries, a terminal device generally needs to have features such as a relatively low cost, relatively small dimensions (for example, being ultra-thin), being maintenance-free, and a long service life. Therefore, to meet the foregoing conditions, a zero-power communication technology may be used to perform communication between a network device and the terminal device. In this case, the terminal device may also be referred to as a "zero-power communications terminal" or a "zero-power terminal".

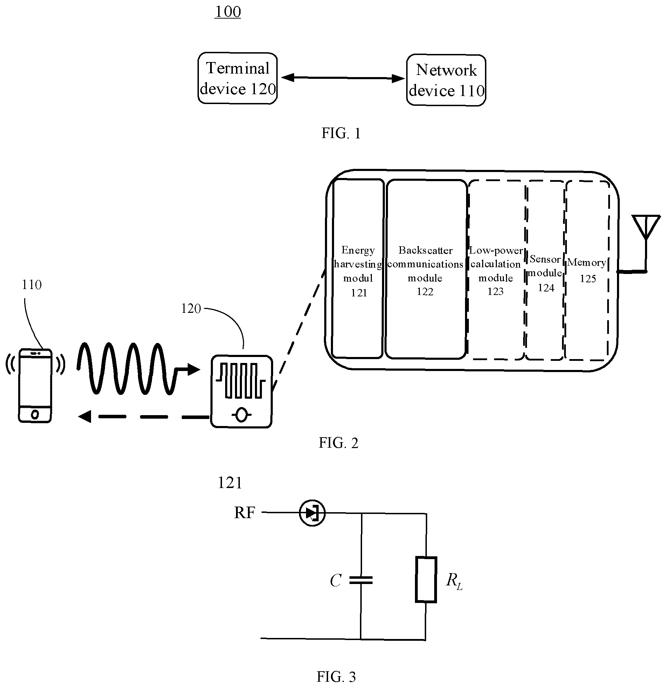

The following describes a zero-power communication technology and a zero-power terminal with reference to FIG. 1 to FIG. 5. FIG. 1 is an architecture of a zero-power communications system 100 to which embodiments of this application are applicable. The architecture shown in FIG. 1 includes a network device 110 and a terminal device 120. The network device 110 may be a device that communicates with the terminal device 120. The network device 110 may provide communication coverage for a specific geographic area, and may communicate with the terminal device 120 located in the coverage area.

The network device 110 and the terminal device 120 may communicate with each other based on a backscatter (back scattering) communication technology. In the backscatter communication technology, a signal used for backscatter communication is essential. The signal used for backscatter communication is a wireless signal, for example, a radio frequency signal. The signal used for backscatter communication may include, for example, an energy supply signal and a carrier signal. In some embodiments, the network device 110 may transmit an energy supply signal to the terminal device 120, to supply energy to the terminal device. In some other embodiments, the terminal device 120 may transmit data to the network device 110 through a carrier signal. In some implementations, the energy supply signal may further carry data or control information transmitted by the network device 110 to the terminal device 120. Certainly, the energy supply signal may also be used only for energy supply. This is not limited in embodiments of this application.

It should be noted that FIG. 1 exemplarily shows one network device and one terminal device. Optionally, the communications system 100 may include a plurality of network devices, and another quantity of terminal devices may be included in a coverage range of each network device. This is not limited in embodiments of this application.

In addition, in some implementations, the communications system 100 may further include another network entity such as a network controller or a mobility management entity. This is not limited in embodiments of this application.

It should be understood that the technical solutions in embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, LTE time division duplex (time division duplex, TDD), and a cellular internet of things. The technical solutions provided in this application may be further applied to a future communications system, for example, a 6th generation mobile communications system.

A terminal device in embodiments of this application may also be referred to as a user equipment (user equipment, UE), an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The terminal device in embodiments of this application may refer to a device providing a user with voice and/or data connectivity and capable of connecting people, objects, and machines, such as a handheld device, an in-vehicle device, a home appliance, a sensor, or an electronic tag that has a wireless connection function. A terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. All terminal devices in embodiments of this application may be zero-power terminals.

A network device in embodiments of this application may be a device configured to communicate with the terminal device. If the terminal device is an electronic tag, the network device may be a reader/writer (for example, a reader/writer based on a radio frequency identification (radio frequency identification, RFID) technology) that is configured to read from and write into the electronic tag. The network device may also be an access network device or a radio access network device. For example, the network device may be a base station. The network device in embodiments of this application may refer to a radio access network (radio access network, RAN) node (or device) that connects the terminal device to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may refer to a communications module, a modem, or a chip disposed in the device or the apparatus described above. Alternatively, the base station may be a mobile switching center, a device that functions as a base station in device-to-device (device-to-device, D2D), vehicle-to-everything (vehicle-to-everything, V2X), and machine-to-machine (machine-to-machine, M2M) communication, a network-side device in a 6G network, a device that functions as a base station in a future communications system, or the like. The base station may support networks of a same access technology or different access technologies. A specific technology and a specific device form used by the network device are not limited in embodiments of this application.

The base station may be fixed or mobile. For example, a helicopter or an unmanned aerial vehicle may be configured to serve as a mobile base station, and one or more cells may move depending on a location of the mobile base station. In other examples, a helicopter or an unmanned aerial vehicle may be configured to function as a device that communicates with another base station.

In some deployments, the network device in embodiments of this application may be a CU or a DU, or the network device includes a CU and a DU. A gNB may further include an AAU.

The network device and the terminal device may be deployed on land, including being indoors or outdoors, handheld, or in-vehicle, may be deployed on a water surface, or may be deployed on a plane, a balloon, or a satellite in the air. A scenario in which the network device and the terminal device are located is not limited in embodiments of this application.

It should be understood that all or some of functions of a communications device in this application may also be implemented by software functions running on hardware, or by virtualization functions instantiated on a platform (for example, a cloud platform).

To facilitate understanding of a zero-power communication technology, the following describes a terminal device that supports a zero-power communication technology with reference to FIG. 2.

Generally, the terminal device 120 may include an energy harvesting module 121 and a backscatter communications module 122. The following describes the energy harvesting module 121 and the backscatter communications module 122 with reference to FIG. 3 to FIG. 5. For brevity, details are not described herein again. In some cases, the terminal device 120 may further include a low-power calculation module 123. The low-power calculation module 123 is configured to provide the terminal device 120 with a calculation function, for example, data processing. In some other cases, the terminal device 120 may further include a sensor 124, configured to collect external information (such as an ambient temperature and ambient humidity). In some other cases, the terminal device 120 may further include a memory 125, configured to store some information (for example, the external information collected through the sensor or an object identifier).

The energy harvesting module 121 is configured to harvest energy. In some implementations, energy may be harvested through an energy supply signal transmitted by a network device. The energy supply signal may be a "radio frequency signal" transmitted by the network device. Therefore, the energy harvesting module is also referred to as a "radio frequency energy harvesting module".

FIG. 3 shows a possible structure of the energy harvesting module. As shown in FIG. 3, the energy harvesting module 121 may harvest energy of a spatial electromagnetic wave of a radio frequency signal based on an electromagnetic induction principle, and store the harvested energy in a capacitor C. This is a charging process of the capacitor C. After the charging process of the capacitor C ends, the capacitor C may start to discharge, to supply energy for working of the terminal device. For example, the discharging of the capacitor C may be used to drive the terminal device to perform low-power demodulation on data transmitted by the network device. For another example, the discharging of the capacitor C may be used to drive the terminal to modulate to-be-transmitted data. For still another example, the discharging of the capacitor C may be used to drive a sensor of the terminal device to perform data collection. For yet another example, the discharging of the capacitor C may be used to drive the terminal device to read data in the memory 125 or the like.

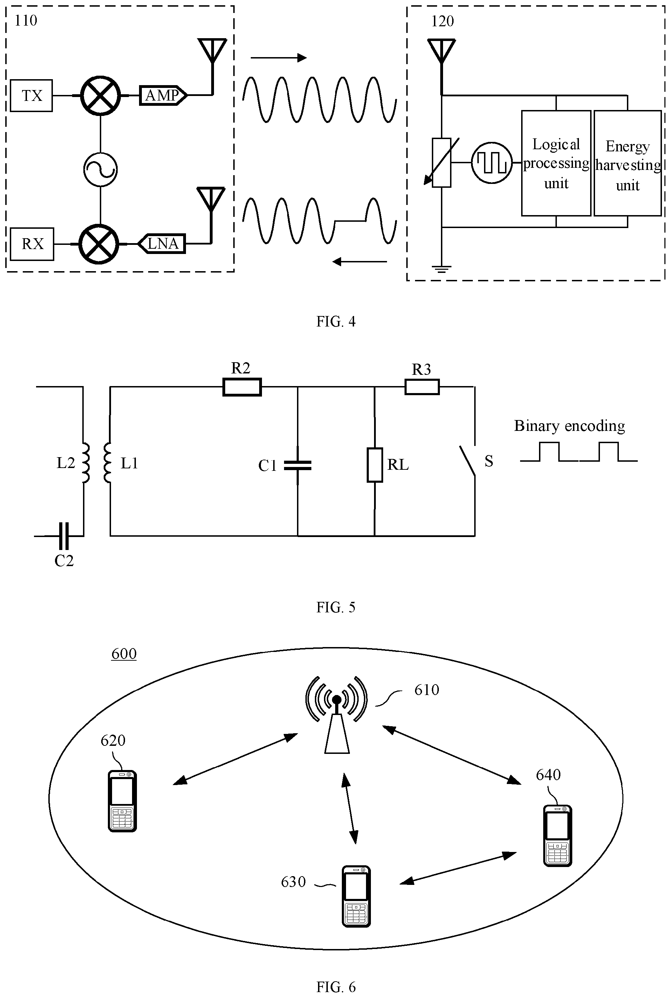

The backscatter communications module 122 is configured to perform backscatter communication between the terminal device 120 and the network device 110. The following describes a backscatter communication principle according to an embodiment of this application with reference to FIG. 4. Referring to FIG. 4, the terminal device 120 receives a wireless signal transmitted by the network device 110, modulates the wireless signal to load data that needs to be transmitted, and finally radiates the modulated signal from an antenna. This information transmission process is referred to as backscatter communication. The wireless signal may also be referred to as a carrier signal. The carrier signal may refer to a wireless signal that is not modulated. The carrier signal may be, for example, a sine wave signal. Backscatter communication and a load modulation function are inseparable. The load modulation function may be understood as adjusting and controlling a circuit parameter of an oscillation circuit of the terminal device according to a beat of a data flow, so that parameters of the terminal device, for example, an impedance magnitude, change accordingly, thereby completing a modulation process.

In some implementations, another component may be further disposed on a transport (transport, TX) path of the network device 110, and is configured to process a to-be-transmitted signal. For example, the component is an amplifier (amplifier, AMP). Another component may be further disposed on a receive (receive, RX) path of the network device 110, and is configured to process a received signal. For example, the component is a low noise amplifier (low noise amplifier, LNA).

In some other implementations, the terminal device 120 may include an energy harvesting module 121, and the energy harvesting module 121 may be configured to harvest any type of signal in an environment. For example, the energy harvesting module may be configured to harvest energy of an energy supply signal transmitted by a network device. A form of the energy supply signal is not specifically limited in embodiments of this application. For example, the energy supply signal may be a wireless signal that is modulated, or may be a wireless signal that is not modulated. The carrier signal described above may also be used as an energy supply signal. For another example, the energy supply signal may also be a wireless signal of any waveform, such as a sine wave or a square wave.

Certainly, a logical processing unit may be further disposed in the terminal device 120, to execute a corresponding calculation function.

It should be noted that, regardless of the network device 110 or the terminal device 120, FIG. 4 only exemplarily shows a connection structure of a signal processing circuit. Processing circuits of the network device 110 and/or the terminal device 120 may include other components. This is not specifically limited in embodiments of this application.

Generally, a load modulation function may be implemented in two manners: resistive load modulation and capacitive load modulation. FIG. 5 shows a circuit diagram of a terminal device based on a resistive load modulation technology. It should be noted that the circuit shown in FIG. 5 implements a load modulation technology in a manner similar to an implementation of an existing circuit that implements a load modulation technology. For brevity, functions of resistors R2 and R3, capacitors C1 and C2, and inductors L1 and L2 included in the circuit shown in FIG. 5 are not described again.

In resistive load modulation, a resistor R_{L} may be connected in parallel to a load. A switch S may implement connection or disconnection of the resistor R_{L} based on control of a binary data flow. In this way, the connection or disconnection of the resistor R_{L} causes a change to a circuit voltage, and the change to the circuit voltage may control an amplitude magnitude of a backscatter signal of the terminal device, thereby implementing modulation of the backscatter signal. That is, amplitude-shift keying (amplitude-shift keying, ASK) modulation is performed on the backscatter signal.

Similarly, in capacitive load modulation, connection or disconnection of a capacitor may be controlled based on a binary data flow, to change a circuit resonance frequency, thereby changing an operating frequency of a backscatter signal to implement frequency-shift keying (frequency-shift keying, FSK) modulation.

As described above, the terminal device may perform information modulation on an incoming signal (that is, a carrier signal) in a load modulation manner, thereby implementing a backscatter communication process. Therefore, the terminal device in backscatter communication generally has the following advantages.

Advantage 1: Because the terminal device does not need to proactively transmit a signal, a complex radio frequency path does not need to be constructed. For example, components such as a power amplifier (power amplifier, PA) and a radio frequency filter may not be disposed in a radio frequency path, to reduce a cost and a volume of the terminal.

Advantage 2: Because the terminal device does not need to proactively generate a high-frequency signal, a high-frequency crystal oscillator is not required, to reduce the cost and the volume of the terminal device.

Advantage 3: Because the terminal device may communicate with the network device by using a backscatter technology, energy consumed by the terminal device during communication is relatively low, and even energy of the terminal device does not need to be consumed.

In addition to backscatter communication, energy harvesting, and the load modulation function described above, the terminal device may further have an encoding function. Data transmitted by an encoding end (such as a terminal device or an electronic tag) may be represented by different forms of code as binary bits "1" and "0". In a zero-power communications system, common encoding manners may include non-return-to-zero inverted (NRZI) encoding, Manchester (Manchester) encoding, unipolar return-to-zero (Unipolar RZ) encoding, differential bi-phase (DBP) encoding, Miller (Miller) encoding, differential encoding, or the like. Generally, an encoding process is to represent 0 and 1 by using different pulse signals.

Based on the foregoing description of the zero-power communication technology, it may be learned that, a terminal device (also referred to as a "zero-power terminal") in zero-power communication consumes little energy of the terminal device, and may not even consume energy of the terminal device. Therefore, in the zero-power communication technology, based on an energy source and an energy usage manner of the terminal device, the terminal device may be classified into three types: a passive zero-power terminal, a half-passive zero-power terminal, and an active zero-power terminal.

### 1. Passive zero-power terminal

A passive zero-power terminal generally does not require an internal battery. When the terminal device approaches a network device, the terminal device is located in a near field range formed by radiation of an antenna of the network device. In this case, the antenna of the terminal device may generate an induced current through electromagnetic induction, and the induced current may supply energy to the terminal device, to implement demodulation of a received signal and/or modulation, encoding, and the like of a to-be-transmitted signal. In some implementations, the passive zero-power terminal may be an electronic tag. Accordingly, the network device may be a reader/writer in a radio frequency identification (radio frequency identification, RFID) system, and is configured to read content in the electronic tag and/or is configured to change the content in the electronic tag.

### 2. Half-passive zero-power terminal

No conventional battery is installed in a half-passive zero-power terminal, but radio wave energy may be harvested by using an energy harvesting module 121, and the harvested energy is stored in an energy storage unit (for example, a capacitor). After obtaining the energy, the energy storage unit may supply energy to the terminal device, to implement demodulation of a received signal and/or modulation, encoding, and the like of a to-be-transmitted signal.

### 3. Active zero-power terminal

An active zero-power terminal may have a built-in battery. The battery may supply energy to the terminal device, to implement demodulation of a received signal and/or modulation, encoding, and the like of a to-be-transmitted signal. However, when the terminal device performs communication by using a backscatter technology, the terminal device does not need to consume energy of the battery. Therefore, for this type of terminal device, "zero-power" is mainly reflected in a scenario in which the terminal device performs communication by using a backscatter technology.

In some implementations, the active zero-power terminal may be an electronic tag, and the network device may be an RFID reader/writer. In this case, the built-in battery may supply power to an RFID chip in the terminal device, to increase a read/write distance between the RFID reader/writer and the electronic tag. In another aspect, the built-in battery may supply power to the RFID chip in the terminal device, to shorten a read/write latency of the RFID reader/writer on the electronic tag, to help to improve communication reliability.

A zero-power terminal in embodiments of this application has features such as low complexity, supporting environmental energy supply, backscatter, and a new waveform. A name of the zero-power terminal in embodiments of this application does not constitute a limitation on an energy source and an energy usage manner of the zero-power terminal, provided that energy required for working of the zero-power terminal mainly comes from an external environment. In this case, the terminal device may be a zero-power device or a low-power device. In some embodiments, the zero-power terminal may also be referred to as a terminal with environmental energy supply, a terminal based on energy harvesting, or the like.

With rapid development of communication technologies, types and application scenarios of terminal devices have been increasing, and higher requirements are also imposed on prices and power consumption of the terminal devices. Some communications systems introduce zero-power terminals to reduce power consumption and costs of terminals. For example, a current protocol starts to consider introducing a zero-power terminal into a Wi-Fi communications system, to reduce power consumption and costs of Wi-Fi communications devices. The following describes a Wi-Fi communications system with reference to FIG. 6.

FIG. 6 is a schematic diagram of a Wi-Fi communications system according to an embodiment of this application. The system 600 shown in FIG. 6 includes an access point (access point, AP) 610 and stations (station, STA) 620 to 640. The AP may be a device that communicates with the STAs. The AP may provide communication coverage for a specific geographical area, and may communicate with a STA located in the coverage area.

In some embodiments, communication may also be performed between the plurality of STAs, and the communication between the plurality of STAs may also be understood as D2D communication. As shown in FIG. 6, the STA 630 may communicate with the STA 640.

The Wi-Fi system may include one or more basic service sets (basic service set, BSS). A network node of the BSS includes an AP and a STA. Each BSS may include one AP and a plurality of STAs associated with the AP. It should be noted that FIG. 6 exemplarily shows one AP and three STAs. Optionally, the communications system 600 may include a plurality of APs, and another quantity of STAs may be included in a coverage range of each AP. This is not limited in embodiments of this application.

The AP may also be referred to as a radio access point, a hotspot, or the like. The AP is an access point for a terminal device to access a wired network, and is mainly deployed in a home, a building, or a campus. A typical coverage radius of the AP is tens of meters to hundreds of meters. It should be understood that the AP may also be deployed outdoors. Currently, the AP mainly uses an institute of electrical and electronics engineers (institute of electrical and electronics engineers, IEEE) 802.11 series standard. The AP in embodiments of this application may support one or more of the following standards: 802.11ah, 802.11a/g, 802.11e, 802.11n, 802.11ax, 802.11be, 802.11ac, 802.11g, 802.11b, or 802.11a.

The STA may be understood as a terminal device. The STA may be a wireless communications chip, a wireless sensor, or a wireless communications terminal. The STA may be any type of terminal device described above. For example, the STA may be a mobile phone, a tablet computer, a set-top box, a smart TV, a smart wearable device, an in-vehicle communications device, a computer, or the like that supports a Wi-Fi communication function. The STA may be a device that supports IEEE 802.11 series standards. For example, the STA may support one or more of the following standards: 802.11ah, 802.11a/g, 802.11e, 802.11n, 802.11ax, 802.11be, 802.11ac, 802.11g, 802.11b, or 802.11a.

A Wi-Fi device generally performs information transmission based on a physical layer protocol data unit (physical layer protocol data unit, PPDU) frame. For ease of understanding, the following first describes a structure of the PPDU frame.

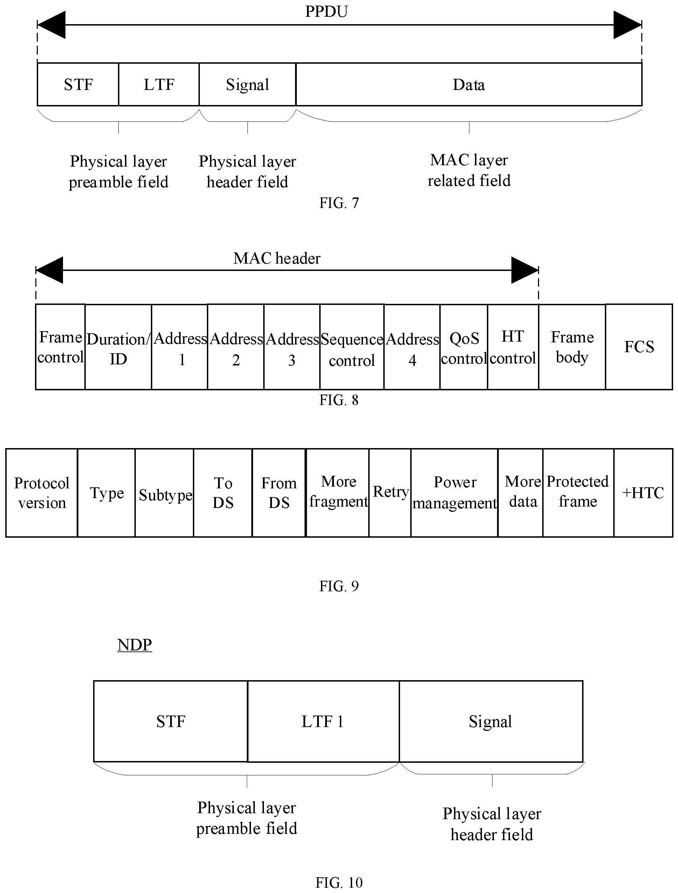

The PPDU frame may include a physical layer related field and a medium access control (medium access control, MAC) layer related field. The MAC layer related field may also be referred to as a data part. FIG. 7 is a schematic diagram of the structure of the PPDU frame. Referring to FIG. 7, the physical layer related field may include a physical layer header (header) field and a physical layer preamble (preamble) field. The physical layer preamble field may include a short training field (short training field, STF) and a long training field (long training field, LTF).

The STF in the physical layer preamble field may include 10 short symbols (symbol), and the 10 symbols may be denoted as t1 to t10. A length of each symbol may be 0.8 µs. Each symbol includes many functions, and is mainly used to implement frame synchronization and coarse frequency synchronization. t1 to t7 mainly include functions such as signal detect (signal detect), automatic gain control (automatic gain control, AGC), and diversity receiving (diversity selection). t8 to t10 mainly include functions such as coarse frequency (coarse frequency) synchronization, offset estimation (offset estimation), and timing synchronize (timing synchronize).

The LTF in the physical layer preamble field is mainly used to implement fine frequency synchronization and channel estimation.

The physical layer header field may include a signal (signal) field. The signal field is used to carry information related to the data part. For example, the signal field may be used to carry information such as a data transmission rate, a length (length) of a data packet, a reserved bit, and a tail bit.

FIG. 7 is only a schematic diagram of a PPDU frame, and does not constitute a limitation on the solutions in embodiments of this application. For example, in different protocols, a manner of dividing a physical layer header may be different. The 802.11a/g is used as an example. For a PPDU frame in the 802.11a/g, a physical layer header field of the PPDU frame includes a physical layer preamble field and a signal field.

The MAC layer related field may be used to carry a MAC frame. A frame format of the MAC frame may include the following parts: a MAC header field, a frame body (frame body) field, and a frame check sequence code (frame check sequences, FCS) field, as shown in FIG. 8.

The MAC header field may include the following parts: a frame control (frame control) field, a duration or identifier (duration or identity, duration/ID) field, an address (address) field, a sequence control (sequence control) field, a quality of service control (quality of service control, QoS control) field, and a high throughput control (high throughput control, HT control) field.

Referring to FIG. 9, the frame control field of the MAC header may include the following parts: a protocol version (protocol version) field, a type (type) field, a subtype (subtype) field, a to DS field, a from DS field, a more fragment (more fragment) field, a retry (retry) field, a power management (power management) field, a more data (more data) field, a protected frame (protected frame) field, and a +high throughput control (high throughput control, +HTC) field. The following describes these parts.

Protocol version field: used to indicate a version number used for the PPDU frame. A value of the Protocol version field may be 0 or 1.

Type field: used to indicate a type of the PPDU frame. The type of the PPDU frame may include a control frame, a management frame, and a data frame. The control frame may be used for handshake communication and positive acknowledgement during contention, ending of a non-contention period, and the like. The management frame may be used to control negotiation and a relationship between a STA and an AP, such as association, authentication, and synchronization. The data frame may be used to transmit data in a contention period and a non-contention period.

Subtype field: used to further determine a subtype of a frame type. The following provides values and related descriptions of the type field and the subtype field with reference to Table 1.

To DS field: used to indicate that the PPDU frame is a frame transmitted by a BSS to a distributed system (distribution system, DS).

From DS field: used to indicate that the PPDU frame is a frame transmitted by a DS to a BSS.

More fragment field: used to describe a case in which a long frame is fragmented. For example, when a value of this field is 1, it indicates that there is another frame that needs to be transmitted.

Retry field: used for frame retransmission, indicating that a fragment is a retransmission frame of a previously transmitted fragment. A receive end may cancel the retransmission frame by using the retry field.

Power management field: used to indicate a power management mode used by a STA after a frame is transmitted. When a value of this field is 1, it indicates that the STA is in a power saving mode. When the value of this field is 0, it indicates that the STA is in a non-power saving working mode.

More data field: When a value of this field is 1, it indicates that there is at least one data frame that needs to be transmitted to a STA.

Protected frame field: used to indicate whether a frame body part includes data processed with a secret key (for example, a wired equivalent privacy (wired equivalent privacy, WEP) algorithm). If the frame body part includes encrypted data, a value of this field is 1. If the frame body part does not include encrypted data, the value of this field is 0.

The +HTC field is an indicator bit related to the HT Control field, and is used to indicate some control information.

The foregoing describes the frame control field in the MAC header field with reference to FIG. 9, and the following describes other fields in the MAC header field.

Duration/ID field: used to indicate how long the PPDU frame and an acknowledgement frame of the PPDU frame will occupy a channel. A value of this field may be used for calculation of a network allocation vector (NAV).

Fields of Address 1 to Address 4: used to indicate address fields. The address fields may indicate one or more of the following: a destination address (destination address, DA), a source address (source address, SA), a transmitting address (transmitting address, TA), a receiving address (receiving address, RA), or a BSS ID.

Sequence control field: may be used to filter out duplicate frames. The Sequence control field may include a 12-bit sequence number (sequence number) representing a MAC service data unit (MAC service data unit, MSDU) or a MAC management service data unit (MAC management service data unit, MMSDU), and a 4-bit fragment number (fragment number) representing each fragment of the MSDU and the MMSDU.

The QoS control field is a MAC layer field newly added in the 802.11e, and is used for priority control. This field is available only when the data frame is of a QoS data subtype.

The HT control field is a MAC layer field newly added in the 802.11n. Starting from the 802.11n, MAC supports a 40M bandwidth, that is, two original 20M bandwidths are combined into one 40M bandwidth. This field provides some control for high-throughput data. This field is available only when the PPDU frame is a high-throughput frame.

The frame body field is also referred to as a data field, and is used to carry to-be-transmitted or received information.

The FCS field may include a 32-bit cyclic redundancy check (cyclic redundancy check, CRC), and is used for error detection in the PPDU frame.

Table 1 shows manners in which types and subtypes are combined.

It may be learned from Table 1 that, when a value of the type field is 00, it indicates that the PPDU frame is a management frame. When the value of the type field is 01, it indicates that the PPDU frame is a control frame. When the value of the type field is 10, it indicates that the PPDU frame is a data frame. A value 11 of the type field is a reserved value.

**Table 1**

| Type | Description of the type | Subtype | Description of the subtype |
|---|---|---|---|
| 00 | Management | 0000 | Association request |
| | | 0001 | Association response |
| | | 0010 | Reassociation request |
| | | 0011 | Reassociation response |
| | | 0100 | Probe request |
| | | 0101 | Probe response |
| | | 0110 to 0111 | Reserved |
| | | 1000 | Beacon |
| | | 1001 | ATIM |
| | | 1010 | Disassociation |
| | | 1011 | Authentication |
| | | 1100 | Deauthentication |
| | | 1101 | Action |
| | | 1110 | Action no ACK |
| | | 1111 | Reserved |
| 01 | Control | 0000 to 0110 | Reserved |
| | | 0111 | Control wrapper |
| | | 1000 | Block ACK request |
| | | 1001 | Block ACK |
| | | 1010 | PS-Poll |
| | | 1011 | RTS |
| | | 1100 | CTS |
| | | 1101 | ACK |
| | | 1110 | CF-End |
| | | 1111 | CF-End+CF-ACK |
| 10 | Data | 0000 | Data |
| | | 0001 | Data+CF-ACK |
| | | 0010 | Data+CF-Poll |
| | | 0011 | Data+CF-ACK+CF-Poll |
| | | 0100 | Null (no data) |
| | | 0101 | CF-ACK (no data) |
| | | 0110 | CF-Poll (no data) |
| | | 0111 | CF-ACK+CF-Poll (no data) |
| | | 1000 | QoS data |
| | | 1001 | QoS data+CF-ACK |
| | | 1010 | QoS data+CF-Poll |
| | | 1011 | QoS data+CF-ACK+CF-Poll |
| | | 1100 | QoS null (no data) |
| | | 1101 | Reserved |
| | | 1110 | QoS CF-Poll (no data) |
| | | 1111 | QoS CF-ACK+CF-Poll (no data) |
| 11 | Reserved | 0000 to 1111 | Reserved |

For a management frame, the management frame may be divided into different subtypes according to a value of a subtype field. For example, when the value of the subtype field is 0000, it indicates that the PPDU frame is an association request frame. When the value of the subtype field is 0001, it indicates that the PPDU frame is an association response frame. When the value of the subtype field is 0010, it indicates that the PPDU frame is a reassociation request frame. When the value of the subtype field is 0011, it indicates that the PPDU frame is a reassociation response frame. When the value of the subtype field is 0100, it indicates that the PPDU frame is a probe request frame. When the value of the subtype field is 0101, it indicates that the PPDU frame is a probe response frame. When the value of the subtype field is 1000, it indicates that the PPDU frame is a beacon (beacon) frame. When the value of the subtype field is 1001, it indicates that the PPDU frame is an announcement traffic indication message (announcement traffic indication message, ATIM) frame. When the value of the subtype field is 1010, it indicates that the PPDU frame is a disassociation frame. When the value of the subtype field is 1011, it indicates that the PPDU frame is an authentication frame. When the value of the subtype field is 1100, it indicates that the PPDU frame is a deauthentication frame. When the value of the subtype field is 1101, it indicates that the PPDU frame is an action frame. When the value of the subtype field is 1110, it indicates that the PPDU frame is a action no ACK frame. Reserved values of the subtype field are 0110 to 0111 and 1111.

For a control frame, the control frame may be divided into different subtypes according to a value of a subtype field. For example, when the value of the subtype field is 0111, it indicates that the PPDU frame is a control wrapper frame. When the value of the subtype field is 1000, it indicates that the PPDU frame is a block ACK request frame. When the value of the subtype field is 1001, it indicates that the PPDU frame is a block ACK frame. When the value of the subtype field is 1010, it indicates that the PPDU frame is a power save poll (power save poll, PS-Poll) frame. When the value of the subtype field is 1011, it indicates that the PPDU frame is a request to send (request to send, RTS) frame. When the value of the subtype field is 1100, it indicates that the PPDU frame is a clear to send (clear to send, CTS) frame. When the value of the subtype field is 1101, it indicates that the PPDU frame is an acknowledge (acknowledge, ACK) frame. When the value of the subtype field is 1110, it indicates that the PPDU frame is a contention-free end (contention free end, CF-End) frame. When the value of the subtype field is 1111, it indicates that the PPDU frame is a CF-End+CF-ACK frame. Reserved values of the subtype field are 0000 to 0110.

For a data frame, the data frame may be divided into different subtypes according to a value of a subtype field. When the value of the subtype field is 0000, it indicates that the PPDU frame is a data frame. When the value of the subtype field is 0001, it indicates that the PPDU frame is a data+CF-ACK frame. When the value of the subtype field is 0010, it indicates that the PPDU frame is a data+CF-Poll frame. When the value of the subtype field is 0011, it indicates that the PPDU frame is a data+CF-ACK+CF-Poll frame. When the value of the subtype field is 0100, it indicates that the PPDU frame is a null frame and does not carry data. When the value of the subtype field is 0101, it indicates that the PPDU frame is a CF-ACK frame and does not carry data. When the value of the subtype field is 0110, it indicates that the PPDU frame is a CF-Poll frame and does not carry data. When the value of the subtype field is 1000, it indicates that the PPDU frame is a QoS data frame. When the value of the subtype field is 1001, it indicates that the PPDU frame is a QoS data+CF-ACK frame. When the value of the subtype field is 1010, it indicates that the PPDU frame is a QoS data+CF-Poll frame. When the value of the subtype field is 1011, it indicates that the PPDU frame is a QoS data+CF-ACK+CF-Poll frame. When the value of the subtype field is 1100, it indicates that the PPDU frame is a QoS null frame and does not carry data. When the value of the subtype field is 1110, it indicates that the PPDU frame is a QoS CF-Poll frame and does not carry data. When the value of the subtype field is 1111, it indicates that the PPDU frame is a QoS CF-ACK+CF-Poll frame and does not carry data. A reserved value of the subtype field is 1101.

When the value of the type field is 11, all values of the subtype field are reserved values, that is, reserved values of the subtype field are 0000 to 1111.

In addition to the data frame, the control frame, and the management frame described above, the PPDU frame may further include another type of frame, for example, a null data packet (null data packet, NDP) frame.

A main function of the NDP frame is to measure or carry control information. The NDP frame does not carry data. A structure of the NDP frame mainly includes a physical layer related field, but does not include a MAC layer related field. For example, the NDP frame mainly includes a physical layer preamble field and a physical layer header field, but does not include a MAC header field and an MSDU, as shown in FIG. 10.

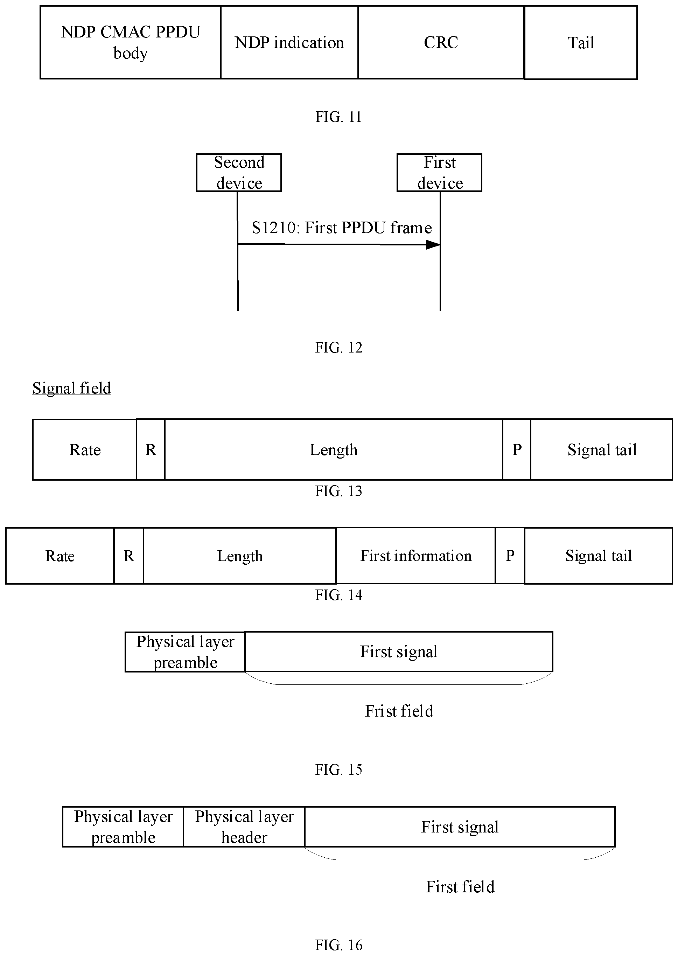

The 802.11ah is used as an example. An NDP frame may include an S1G NDP Sounding (Sounding) frame and an NDP carrying medium access control (carrying medium access control, CMAC) PPDU frame. The S1G NDP Sounding frame may be used for channel measurement. The NDP CMAC PPDU frame may be used to carry control information. A structure of the NDP CMAC PPDU frame is shown in FIG. 11.

The physical layer header field may include a signal field. A length of the signal field is related to a data transmission rate. FIG. 11 is a schematic structural diagram of the signal field. The signal field may include the following fields: an NDP CMAC PPDU body field, an NDP indication (indication) field, a CRC field, and a tail (tail) field.

The NDP indication field may be used to indicate a type of the NDP. For example, when a value of the NDP indication field is 0, it indicates that the NDP frame is an S1G NDP Sounding frame. When the value of the NDP indication field is 1, it indicates that the NDP frame is an NDP CMAC PPDU frame.

The NDP CMAC PPDU body field may be used to indicate a type of information carried in the NDP frame. For example, the NDP CMAC PPDU body field may include an NDP CMAC PPDU type field and related control information. For example, when the NDP CMAC PPDU type field indicates that the NDP is a CTS, it indicates that the control information carried in the NDP is CTS information.

It may be learned from the foregoing description that a zero-power device may perform communication based on a backscatter communication technology. In the backscatter communication technology, it is essential to obtain a signal (such as a carrier signal or an energy supply signal) used for backscatter communication. A carrier signal is used as an example. The terminal device may perform backscatter communication by using the carrier signal, for example, transmit data by using the carrier signal. An energy supply signal is used as an example. The terminal device may obtain, by using the energy supply signal, energy used for backscatter communication. However, currently a solution to how to obtain, in a Wi-Fi system, a signal used for backscatter communication is still unavailable.

Based on this, in embodiments of this application, a signal used for backscatter communication may be obtained through a PPDU frame. Specifically, in embodiments of this application, a PPDU frame may be designed, so that at least a part of the PPDU frame corresponds to a signal used for backscatter communication. For example, the PPDU frame provided in embodiments of this application can carry a signal used for backscatter communication, or can carry indication information related to the signal, to help a device in the Wi-Fi system obtain the signal used for backscatter communication.

With reference to FIG. 12, the following describes in detail a wireless communication method according to an embodiment of this application. The method shown in FIG. 12 is executed by a first device and a second device.

Referring to FIG. 12, in step S1210, the second device transmits a first PPDU frame to the first device. Accordingly, the first device may receive the first PPDU frame from the second device. At least a part of the first PPDU frame corresponds to the first signal. The first signal is a signal used for backscatter communication.

The first device and the second device are devices in a Wi-Fi communications system. For example, the first device is a STA, and the second device is an AP. For another example, both the first device and the second device are STAs. The first device may be any type of terminal device described above. The first device may also be referred to as a zero-power terminal.

FIG. 6 is used as an example. In some embodiments, because the AP 610 may communicate with the STAs 620 to 640, the AP 610 may transmit first PPDU frames to the STAs 620 to 640. In this case, the first device is one of the STAs 620 to 640, and the second device is the AP 610. In some other embodiments, because the STA 630 and the STA 640 may also communicate with each other, a first PPDU frame may also be transmitted between the STA 630 and the STA 640. For example, the STA 630 may transmit a first PPDU frame to the STA 640. In this case, the first device is the STA 640, and the second device is the STA 630. Alternatively, the STA 640 may transmit a first PPDU frame to the STA 630. In this case, the first device is the STA 630, and the second device is the STA 640.

The first signal may be understood as a signal required for backscatter communication. The first signal may be the wireless signal described above, and the first signal may be, for example, a radio frequency signal. A type of the first signal is not specifically limited in embodiments of this application. For example, the first signal may be a carrier signal. The first device may perform backscatter communication by using a carrier signal. For example, the first device may transmit, by using a carrier signal, feedback information corresponding to the first PPDU frame. For another example, the first signal may be an energy supply signal. The first device may obtain energy by using the first signal, and the energy may be used by the first device to perform backscatter communication.

To facilitate understanding of embodiments of this application, the following describes the energy supply signal and the carrier signal.

The energy supply signal is an energy source for energy harvesting performed by the first device. The following describes the energy supply signal from aspects such as a transmit end, a frequency band, and a waveform of the energy supply signal. The transmit end of the energy supply signal may be the second device, or may be a base station, a smartphone, a smart gateway, a charging station, a micro base station, an AP, or the like. The frequency band of the energy supply signal may be a low frequency, an intermediate frequency, a high frequency, or the like. The waveform of the energy supply signal may be a sine wave, a square wave, a triangular wave, a pulse wave, a rectangular wave, or the like. In some embodiments, the energy supply signal may be a continuous wave, or may be a discontinuous wave (that is, a specific time interrupt is allowed).

Optionally, the energy supply signal may be an existing signal in a 3rd generation partnership project (3rd generation partnership project, 3GPP) standard. For example, the energy supply signal may be one or more of the following signals: a sounding reference signal (sounding reference signal, SRS), a physical uplink shared channel (physical uplink shared channel, PUSCH), a physical random access channel (physical random access channel, PRACH), a physical uplink control channel (physical uplink control channel, PUCCH), a physical downlink control channel (physical downlink control channel, PDCCH), a physical downlink shared channel (physical downlink shared channel, PDSCH), or a physical broadcast channel (physical broadcast channel, PBCH). In some embodiments, the energy supply signal may also be a Wi-Fi signal or a Bluetooth signal.

Optionally, the energy supply signal may also be implemented by adding a new signal. For example, the energy supply signal may be a newly added signal dedicated to energy supply.

The carrier signal may be used by the first device to generate a backscatter signal. For example, the first device may modulate a received carrier signal according to information that needs to be transmitted, to form a backscatter signal. The following describes the carrier signal from aspects such as a transmit end, a frequency band, and a waveform of the carrier signal. The transmit end of the carrier signal may be the second device, or may be a base station, a smartphone, a smart gateway, a micro base station, an AP, or the like. The frequency band of the carrier signal may be a low frequency, an intermediate frequency, a high frequency, or the like. The waveform of the carrier signal may be a sine wave, a square wave, a triangular wave, a pulse wave, a rectangular wave, or the like. In some embodiments, the carrier signal may be a continuous wave, or may be a discontinuous wave (that is, a specific time interrupt is allowed).

Optionally, the carrier signal may be an existing signal in a 3GPP standard. For example, the carrier signal may be one or more of the following signals: an SRS, a PUSCH, a PRACH, a PUCCH, a PDCCH, a PDSCH, or a PBCH. In some embodiments, the carrier signal may also be a Wi-Fi signal, a Bluetooth signal, or the like.

Optionally, the carrier signal may also be implemented by adding a new signal. For example, the carrier signal may be a newly added carrier signal dedicated to generating a backscatter signal.

It should be noted that in embodiments of this application, the energy supply signal and the carrier signal may be a same signal, or may be different signals. For example, the energy supply signal may be used as the carrier signal. For another example, the carrier signal may be used as the energy supply signal.

It may be learned from the foregoing description that a zero-power device has a feature of low complexity, and supports only a simple modulation scheme, for example, ASK modulation. The zero-power device cannot implement an orthogonal frequency division multiplexing (orthogonal frequency division multiplexing, OFDM) modulation scheme currently supported by a Wi-Fi device. Therefore, a waveform used for zero-power communication is different from a waveform based on OFDM. Therefore, in embodiments of this application, a waveform of the first signal may be different from the waveform based on OFDM. The first signal may also be referred to as a zero-power radio (zero power radio) signal.

That at least a part of the first PPDU frame corresponds to the first signal may be understood as: At least a part of the first PPDU frame may be used to determine the first signal. Herein, the at least a part may be understood as at least some fields.

In an example, the first PPDU frame may include first information, and the first information may be used to indicate the first signal. In another example, the first PPDU frame may include the first signal, that is, the first signal may be carried in the first PPDU frame. The following first describes a solution in which the first PPDU frame includes the first information.

The first information may be understood as information related to the first signal. The first device may determine the first signal through the first information. For example, the first information may be used to indicate one or more of the following of the first signal: a time domain position, a frequency domain position, or a type.

The time domain position is indicated in a plurality of manners, which are not specifically limited in embodiments of this application. The time domain position may include, for example, one or more of the following of the first signal: a start position of a time domain, an end position of a time domain, or duration. If the time domain position includes the start position of the time domain, the first device may receive the first signal from the start position of the time domain. If the time domain position includes the end position of the time domain, the first device may stop receiving the first signal after the end position of the time domain arrives. The duration may be understood as duration in which the first signal occupies a channel. If the time domain position includes the duration, the first device may receive the first signal within the duration.

The frequency domain position is indicated in a plurality of manners, which are not specifically limited in embodiments of this application. The frequency domain position may include, for example, a frequency of the first signal and/or a bandwidth occupied by the first signal. If the frequency domain position includes the frequency of the first signal, the first device may receive the first signal at the frequency. If the frequency domain position includes the bandwidth occupied by the first signal, the first device may receive the first signal in a frequency range corresponding to the bandwidth.

A type of the first signal is not specifically limited in embodiments of this application. For example, the first signal may be an energy supply signal or a carrier signal. If the first signal is an energy supply signal, the first device may obtain energy through the energy supply signal. If the first signal is a carrier signal, the first device may perform backscatter communication by using the carrier signal. For example, the first device may transmit data to the second device by using the carrier signal.

The first information may be carried in any field of the first PPDU frame. This is not specifically limited in embodiments of this application. For example, the first information may be carried in a physical layer related field of the first PPDU frame. For another example, the first information may be carried in a MAC layer related field of the first PPDU frame. The following separately describes these two cases.

### 1. The first information is carried in the physical layer related field.

Because the physical layer related field is located before the MAC layer related field, the first information is carried in the physical layer related field. Therefore, after receiving the physical layer related field, the first device may determine the first information, to obtain the first signal. That is, the first device may obtain the first information without receiving or decoding the MAC layer related field, to help to save power of the first device.

It may be learned from FIG. 7 that the physical layer related field may include a physical layer preamble field and a physical layer header field. The first information may be carried in the physical layer preamble field or the physical layer header field.

In a case in which the first information is carried in the physical layer header field, the first information may be carried in any field of the physical layer header field. For example, the physical layer header field may include a signal field, and the first information may be carried in the signal field.

That the first information is carried in the signal field is used as an example. The first information may be carried in any field of the signal field. For example, the signal field shown in FIG. 13 is used as an example. The signal field may include a rate (rate) field, a length (length) field, and a signal tail (signal tail) field, and the first information may be carried in any one or more of the rate field, the length field, or the signal tail field. The rate field may be used to indicate information about a data transmission rate. A length of the rate field may be, for example, 4 bits. The length field may be used to indicate length information of a data packet. A length of the length field may be, for example, 12 bits. The signal tail field may be used to indicate a tail of the signal field. A length of the signal tail field may be, for example, 6 bits. The signal field shown in FIG. 13 may further include a reserved (reserved, R) field and a parity (parity, P) field.

In some embodiments, that the first information is carried in the signal field may refer to: A field is added to the signal field to carry the first information. For example, a field may be added between the rate field and the length field to carry the first information. For another example, a field may be added between the length field and the signal tail field to carry the first information, as shown in FIG. 14. For still another example, a field may be added before the rate field to carry the first information. For yet another example, a field may be added after the signal tail field to carry the first information.

In some other embodiments, that the first information is carried in the signal field may refer to: The first information is carried by reusing at least some fields in the signal field. For example, at least some fields in the rate field may be reused to carry the first information. For another example, at least some fields in the length field may be reused to carry the first information. For still another example, at least some fields in the signal tail field may be reused to carry the first information.

The first PPDU frame may be any type of PPDU frame that includes a physical layer header field. For example, the first PPDU frame may be any one of a data frame, a management frame, a control frame, or an NDP frame.

For an NDP frame, the NDP frame may be, for example, an NDP CMAC PPDU frame. It may be learned from FIG. 10 and FIG. 11 that a physical layer header of an NDP CMAC PPDU frame may include a signal field, and the signal field includes an NDP CMAC PPDU body field, an NDP indication field, a CRC field, and a tail field. The first information may be carried in any one or more of the NDP CMAC PPDU body field, the NDP indication field, the CRC field, or the tail field. For example, the first information may be carried in the NDP CMAC PPDU body field.

The following describes a solution in which the first information is carried in the physical layer preamble field.

The preamble field may include a preamble sequence. In embodiments of this application, a value of the preamble sequence may be used to indicate the first information, that is, the value of the preamble sequence corresponds to the first information. Different first information may correspond to preamble sequences of different values. Different first information may be understood as different first signals indicated by the first information. The first device may receive the preamble sequence in the first PPDU frame, and determine the first information based on a value of the received preamble sequence.

The first PPDU frame may be any type of PPDU frame that includes a physical layer preamble field. For example, the first PPDU frame may be any one of a data frame, a management frame, a control frame, or an NDP frame.

In some embodiments, if the first information is carried in the physical layer related field, the first signal indicated by the first information may be used for receiving of the data part in the first PPDU frame. That is, energy provided by the first signal for the first device is used to support the receiving of the data part in the first PPDU frame. The first device may obtain energy by receiving the first signal, and receive the data part in the first PPDU frame by using the energy, for example, decode the data part.

### 2. The first information is carried in the MAC layer related field.

The MAC layer related field is mainly used to carry data. Design of the MAC layer related field has great flexibility, that is, information included in the MAC layer related field may be designed according to an actual requirement. The first information is carried in the MAC layer related field, so that design of the first information also has great flexibility. For example, if there is a first signal that needs to be indicated, the first information may be carried in the MAC layer related field. If there is no first signal that needs to be indicated, the first information may not be carried in the MAC layer related field, so that overheads may be saved.

The MAC layer related field may include a MAC header field, a frame body field, and an FCS field. The first information may be carried in any one or more of the MAC header field, the frame body field, or the FCS field. For example, the first information may be carried in the MAC header field. For another example, the first information may be carried in the frame body field. For still another example, the first information may be carried in the FCS field.

In some embodiments, that the first information is carried in the MAC layer related field may refer to: The first information is carried by reusing at least some fields in the MAC layer related field. For example, the first information may be carried by reusing at least some fields in the frame body field. For another example, the first information may be carried by reusing at least some fields in the MAC header field. For still another example, the first information may be carried by reusing at least some fields in the FCS field.

In some other embodiments, that the first information is carried in the MAC layer related field may refer to: A field is added to the MAC layer related field to carry the first information. For example, a field may be added between the MAC header field and the frame body field to carry the first information. For another example, a field may be added between the frame body field and the FCS field to carry the first information. For still another example, a field may be added before the MAC header field to carry the first information. For yet another example, a field may be added after the FCS field to carry the first information.

The first PPDU frame may be any type of PPDU frame that includes a MAC layer related field. For example, the first PPDU frame may be any one of a data frame, a control frame, or a management frame.

In some embodiments, the first PPDU frame may further include second information, and the second information may be used to indicate that the first PPDU frame includes the first information. If the first device detects that the first PPDU frame includes the second information, the first device may determine that the first PPDU frame includes the first information. Further, the first device may receive the first information, and obtain the first signal according to the first information.

A position of the second information in the first PPDU frame is not specifically limited in embodiments of this application, provided that the position of the second information in the first PPDU frame is before a position of the first information in the first PPDU frame. For example, the first information is carried in the MAC layer related field, and the second information may be carried in the physical layer related field. For another example, the first information is carried in the frame body field of a MAC layer, and the second information may be carried in the MAC header field.

The following uses an example in which the second information is carried in the MAC header field for description. For a structure of the MAC header field, refer to FIG. 8 and FIG. 9. The second information may be carried in any field of a MAC header. In some embodiments, the second information may be carried in a type field or a subtype field of the MAC header field.

That the second information is carried in a type field may refer to: A value of the type field corresponds to the second information. For example, the type field has a first target value, and the first target value corresponds to the second information. If the first device detects that the value of the type field is the first target value, the first device may determine that the first PPDU frame carries the first information.

The first target value is not specifically limited in embodiments of this application. For example, the first target value may be any value in 00, 01, 10, or 11. If the first target value is 00, it indicates that the PPDU frame is a management frame, and the PPDU frame carries the first information. If the first target value is 01, it indicates that the PPDU frame is a control frame, and the PPDU frame carries the first information. If the first target value is 10, it indicates that the PPDU frame is a data frame, and the PPDU frame carries the first information. If the first target value is 11, it indicates that the PPDU frame carries the first information. Because 11 is a reserved value of the type field, the reserved value 11 is used as the first target value, so that changes to a format of the PPDU frame may be reduced, and communication complexity may be lowered.

That the second information is carried in a subtype field may refer to: A value of the subtype field corresponds to the second information. For example, the subtype field has a second target value, and the second target value corresponds to the second information. If the first device detects that the value of the subtype field is the second target value, the first device may determine that the first PPDU frame carries the first information.

The second target value is not specifically limited in embodiments of this application. For example, the second target value may be any value ranging from 0000 to 1111. As shown in Table 1, each of the data frame, the control frame, and the management frame includes a subtype field. The second target value in embodiments of this application may be a value of a subtype field of any type of PPDU frame in the data frame, the control frame, or the management frame. The following separately describes subtype fields in the data frame, the control frame, and the management frame.

For the control frame, referring to Table 1, 0000 to 0010 are reserved values of a subtype. Therefore, the second target value may be any value ranging from 0000 to 0010, that is, the second target value may be 0000, 0001, or 0010. Using a reserved value as the second target value may reduce changes to a format of the PPDU frame and lower communication complexity. In this embodiment, when the first device detects that the first PPDU frame is a control frame, and a value of the subtype field of the first PPDU frame is the second target value, the first device may determine that the first PPDU frame carries the first information. Certainly, the second target value may be another value other than 0000 to 0010, that is, the second target value may be any value ranging from 0011 to 1111. That the second target value is 1100 is used as an example. If the second target value is 1100, it indicates that information carried in the first PPDU frame includes CTS information and the first information, that is, a value of the first information is the same as a value of a subtype field corresponding to the CTS information.

For the management frame, referring to Table 1, 0110 to 0111 and 1111 are reserved values of a subtype. Therefore, the second target value may be any value in 0110, 0111, and 1111. Using a reserved value as the second target value may reduce changes to a format of the PPDU frame and lower communication complexity. In this embodiment, when the first device detects that the first PPDU frame is a management frame, and a value of the subtype field of the first PPDU frame is the second target value, the first device may determine that the first PPDU frame carries the first information. Certainly, the second target value may be another value other than 0110, 0111, and 1111, that is, the second target value may be any value ranging from 0000 to 0101 or any value ranging from 1000 to 1110. That the second target value is 1000 is used as an example. If the second target value is 1000, it indicates that information carried in the first PPDU frame includes a beacon and the first information, that is, a value of the first information is the same as a value of a subtype field corresponding to the beacon.

For the data frame, referring to Table 1, 1101 is a reserved value of a subtype. Therefore, the second target value may be 1101. Using a reserved value as the second target value may reduce changes to a format of the PPDU frame and lower communication complexity. In this embodiment, when the first device detects that the first PPDU frame is a data frame, and a value of the subtype field of the first PPDU frame is the second target value, the first device may determine that the first PPDU frame carries the first information. Certainly, the second target value may be another value other than 1101, that is, the second target value may be any value ranging from 0000 to 1100 or any value ranging from 1110 to 1111. That the second target value is 1000 is used as an example. If the second target value is 1000, it indicates that information carried in the first PPDU frame includes QoS data and the first information, that is, a value of the first information is the same as a value of a subtype field corresponding to the QoS data.

If the value of the type field in the first PPDU frame is 11, because 0000 to 1111 are reserved values of the subtype field, the second target value may be any value ranging from 0000 to 1111. In addition, when the second target value is any value ranging from 0000 to 1111, changes to a format of the PPDU frame may be reduced, and communication complexity may be lowered. In this embodiment, when the first device detects that the value of the type field of the first PPDU frame is 11, and the value of the subtype field of the first PPDU frame is the second target value, the first device may determine that the first PPDU frame carries the first information.

The foregoing describes a manner in which the second information is carried in the first PPDU frame when the first PPDU frame is a data frame, a control frame, or a management frame. The following describes a manner in which the second information is carried in an NDP when the first PPDU frame is an NDP frame.

The second information may be carried in a physical layer preamble field or a physical layer header field of the NDP frame. For example, the second information may be carried in an STF field or an LTF field of the physical layer preamble field. For another example, the second information may be carried in a signal field of a physical layer header.

That the NDP frame is an NDP CMAC PPDU frame is used as an example. A signal field of the NDP CMAC PPDU frame may include an NDP CMAC PPDU body field, an NDP indication field, a CRC field, and a tail field. The second information may be carried in any one or more of the NDP CMAC PPDU body field, the NDP indication field, the CRC field, or the tail field.

That the second information may be carried in the NDP CMAC PPDU body field is used as an example. The NDP CMAC PPDU body field may include NDP CMAC PPDU type information and related control information. As described above, when the NDP CMAC PPDU type indicates that the NDP is a CTS, the control information carried in the NDP is CTS information. Based on this, in embodiments of this application, the second information may be carried in an NDP CMAC PPDU type field.

In embodiments of this application, a new value may be defined for the NDP CMAC PPDU type field, and the new value corresponds to the second information. When a value of the NDP CMAC PPDU type field is the new value, it indicates that information carried in the NDP is the first information. Certainly, in some embodiments, the second information may also reuse a value of an existing NDP CMAC PPDU type field. This is not specifically limited in embodiments of this application.

The foregoing describes in detail the solution in which the first PPDU frame includes the first information, and the following describes a solution in which the first PPDU frame includes the first signal. It may be understood that the solution in which the first PPDU frame includes the first information and the solution in which the first PPDU frame includes the first signal may be separately implemented, or may be mutually combined. This is not specifically limited in embodiments of this application.

In an example, the first PPDU frame includes the first information and does not include the first signal. In this case, the first signal indicated by the first information may be carried in another PPDU frame, that is, the first information and the first signal are carried in different PPDU frames, or the first signal indicated by the first information may be a signal in another communications system except a Wi-Fi system.

In another example, the first PPDU frame includes the first information and the first signal. In this case, the first information and the first signal are carried in the same PPDU frame. The first information may indicate related information of the first signal in the first PPDU frame. For example, the first information may indicate a time domain position and/or a frequency domain position of the first signal in the first PPDU frame.

In still another example, the first PPDU frame includes the first signal and does not include the first information. For example, the first information is carried in another PPDU frame, that is, the first information and the first signal are carried in different PPDU frames. For another example, the first device may obtain the first signal by directly receiving the first PPDU frame instead of requiring an indication of the first information.

A position of the first signal in the first PPDU frame is not specifically limited in embodiments of this application. For ease of description, in the following, a field that carries the first signal in the first PPDU frame is referred to as a first field. The first field may be located in any position of the first PPDU frame. This is not specifically limited in embodiments of this application.

For example, the first field may be located before the physical layer related field. For another example, the first field may be located between the physical layer related field and the MAC layer related field. For still another example, the first field may be located after the MAC layer related field.

In some embodiments, the first field may also be located in the physical layer related field or the MAC layer related field. As described above, the physical layer related field may include a physical layer preamble field and a physical layer header field. The first field may be located before the preamble field, or the first field may be located between the preamble field and the physical layer header field, or the first field may be located after the physical layer header field. As described above, the MAC layer related field may include a MAC header field, a frame body field, and an FCS field. The first field may be located before the MAC header field, or the first field may be located between the MAC header field and the frame body field, or the first field may be located between the frame body field and the FCS field, or the first field may be located after the FCS field.

If the first PPDU frame includes both the first information and the first signal, the first field may be located after a field that carries the first information. The following uses examples to describe a relative position relationship between the field that carries the first information and the first field.

If the first information is carried in the physical layer related field, the first field may be located after the physical layer related field. For example, the first field may be located between the physical layer related field and the MAC layer related field, or the first field may be located after the MAC layer related field.

The physical layer related field may include a physical layer preamble field and a physical layer header field. If the first information is carried in the physical layer preamble field, the first field may be located after the physical layer preamble field. For example, the first field may be located between the physical layer preamble field and the physical layer header field, or the first field may be located after the physical layer header field. If the first information is carried in the physical layer header field, the first field may be located after the physical layer header field. For example, the first field may be located between the physical layer header field and the MAC layer related field, or the first field may be located after the MAC layer related field.

If the first information is carried in the MAC layer related field, the first field may be located after the MAC layer related field.

The MAC layer related field may include a MAC header field, a frame body field, and an FCS field. If the first information is carried in the MAC header field, the first field may be located after the MAC header field. For example, the first field may be located between the MAC layer header field and the frame body field, or the first field may be located after the frame body field. If the first information is carried in the frame body field, the first field may be located after the frame body field. For example, the first field may be located between the frame body field and the FCS field, or the first field may be located after the FCS field.

A structure of the first PPDU frame is not specifically limited in embodiments of this application, provided that the first PPDU frame can include the first field and the field that carries the first information. For example, a format of the first PPDU frame may be a newly defined PPDU frame format, or the first PPDU frame may reuse an existing PPDU frame format.

In some embodiments, the first PPDU frame may include only the first field and the field that carries the first information. In this case, the first PPDU frame may be understood as a frame that is dedicated to carrying the first signal. In some other embodiments, in addition to the first field and the field that carries the first information, the first PPDU frame may further include another field. The following uses examples to describe the format of the first PPDU frame.

In an example, if the first information is carried in the physical layer related field, the first PPDU frame may include the physical layer related field and the first field. In some embodiments, the first PPDU frame may include only the physical layer related field and the first field. The first field is located after the physical layer related field. For example, if the first information is carried in the physical layer preamble field, the first PPDU frame may include the preamble field and the first field, as shown in FIG. 15. The first field is located after the preamble field. The first field is adjacent to the preamble field, or another field, for example, a gap (gap) field, may be further included between the first field and the preamble field. For another example, if the first information is carried in the physical layer header field, the first PPDU frame may include the physical layer preamble field, the physical layer header field, and the first field. The first field is located after the physical layer header field, as shown in FIG. 16. The first field may be adjacent to the physical layer header field, or another field, for example, a gap field, may be further included between the first field and the physical layer header field.

A structure of the physical layer related field may be the same as or different from a structure of an existing physical layer related field. This is not specifically limited in embodiments of this application. For example, a structure of the physical layer preamble field may be the same as or different from a structure of an existing physical layer preamble field. For another example, a structure of the physical layer header field may be the same as or different from a structure of an existing physical layer header field.

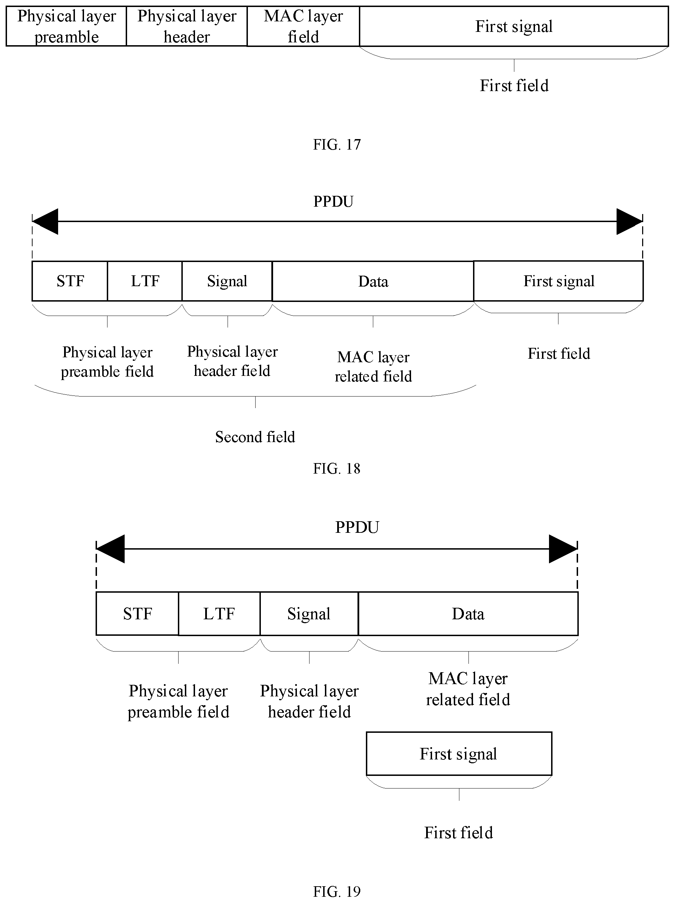

In another example, if the first information is carried in the MAC layer related field, the first PPDU frame may include the physical layer related field, the MAC layer related field, and the first field. The first field is located after the MAC layer related field, as shown in FIG. 17. For example, if the first information is carried in the MAC header field, the first PPDU frame may include the physical layer related field, the MAC header field, and the first field. The first field is adjacent to the MAC header field, or another field, for example, a gap field, may be further included between the first field and the MAC header field. For another example, if the first information is carried in the frame body field, the first PPDU frame may include the physical layer related field, the MAC header field, the frame body field, and the first field. The first field is adjacent to the frame body field, or another field, for example, a gap field, may be further included between the first field and the frame body field.

A structure of the MAC layer related field may be the same as or different from a structure of an existing MAC layer related field. This is not specifically limited in embodiments of this application. For example, a structure of the MAC header field may be the same as or different from a structure of an existing MAC header field. For another example, a structure of the frame body field may be the same as or different from a structure of an existing frame body field.

In some embodiments, in embodiments of this application, a first field may be added to an existing PPDU frame, to form a first PPDU frame. As shown in FIG. 18, the first PPDU frame includes a first field and a second field, the second field is an existing PPDU frame structure, and the first field is a newly added field in embodiments of this application. In this case, the first field may be located after a MAC layer related field.

The existing PPDU frame may be any one of a control frame, a management frame, a data frame, or an NDP frame. For example, a first field may be added to an existing control frame, to form a first PPDU frame. For another example, a first field may be added to an existing management frame, to form a first PPDU frame. For still another example, a first field may be added to an existing management frame, to form a first PPDU frame. For yet another example, a first field may be added to an existing NDP frame, to form a first PPDU frame.

A frequency domain position of the first signal is not specifically limited in embodiments of this application. For example, the frequency domain position in which the first signal is located may be the same as or different from a frequency domain position in which physical layer related information is located. For another example, the frequency domain position in which the first signal is located may be the same as or different from a frequency domain position of MAC layer related information. If the frequency domain position in which the first signal is located is different from the frequency domain position in which the physical layer related information is located, the time domain position in which the first signal is located may overlap the time domain position in which the physical layer related information is located. If the frequency domain position in which the first signal is located is different from the frequency domain position in which the MAC layer related information is located, the time domain position in which the first signal is located may overlap the time domain position in which the MAC layer related information is located.

As shown in FIG. 19, the frequency domain position in which the MAC layer related information is located shown in FIG. 19 is the same as the frequency domain position in which the physical layer related information is located. For ease of description, the following uses the MAC layer related information as an example to describe a relationship between the time domain position in which the first signal is located and the time domain position in which the MAC layer related information is located.

In some embodiments, the time domain position in which the first signal is located partially overlaps the time domain position in which the MAC layer related information is located. For example, the time domain position in which the first signal is located includes the time domain position in which the MAC layer related information is located. For another example, the time domain position in which the MAC layer related information is located includes the time domain position in which the first signal is located.

In some embodiments, the first signal may be used to transmit feedback information corresponding to a first PPDU frame. For example, the first signal may be used to transmit acknowledgement information corresponding to the first PPDU frame. If a first device successfully receives the first PPDU frame, the first device may transmit the acknowledgement information to a second device by using the first signal. If the first device fails to receive the first PPDU frame, the first device may transmit non-acknowledge (non-acknowledge, NACK) information to the second device by using the first signal. FIG. 18 is used as an example. After receiving a data part of the first PPDU frame, the first device may perform backscatter by using the first signal, to transmit the feedback information corresponding to the first PPDU frame.

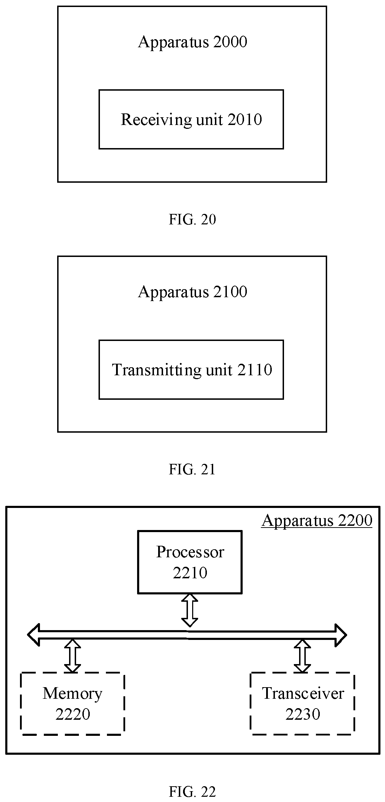

The foregoing describes method embodiments of this application in detail with reference to FIG. 1 to FIG. 19. The following describes apparatus embodiments of this application in detail with reference to FIG. 20 to FIG. 22. It should be understood that the description of the method embodiments corresponds to the description of the apparatus embodiments, and therefore, for parts that are not described in detail, refer to the foregoing method embodiments.

FIG. 20 is a schematic structural diagram of a communications apparatus according to an embodiment of this application. The apparatus shown in FIG. 20 may be the first device described above. As shown in FIG. 20, the apparatus 2000 includes a receiving unit 2010.

The receiving unit 2010 is configured to receive a first PPDU frame from a second device, where at least a part of the first PPDU frame corresponds to a first signal, and the first signal is a signal used for backscatter communication.

In some embodiments, the first PPDU frame includes first information, and the first information is used to indicate the first signal.

In some embodiments, the first information is carried in a physical layer related field of the first PPDU frame.

In some embodiments, the first information is carried in a physical layer header field of the physical layer related field.

In some embodiments, the first PPDU frame is an NDP frame, a physical layer header field of the NDP frame includes an NDP CMAC PPDU body field, and the first information is carried in the NDP CMAC PPDU body field.

In some embodiments, the physical layer header field is a signal field.

In some embodiments, the first information is carried in a physical layer preamble field of the physical layer related field.

In some embodiments, the preamble field includes a preamble sequence, and the preamble sequence has a value corresponding to the first information.

In some embodiments, the first information is carried in a MAC layer related field of the first PPDU frame.

In some embodiments, the first information is carried in a MAC header field or a frame body field of the MAC layer related field.

In some embodiments, the first PPDU frame includes second information, and the second information is used to indicate that the first PPDU frame includes the first information.

In some embodiments, the second information is carried in a MAC header field of the first PPDU frame.

In some embodiments, the second information is carried in a type field and/or a subtype field of the MAC header field.

In some embodiments, the first PPDU frame is a control frame, the second information is carried in the subtype field, the subtype field has a target value, and the target value corresponds to the second information.

In some embodiments, the target value is any value ranging from 0000 to 0010.

In some embodiments, the first PPDU frame is an NDP frame, the NDP frame includes second information, the second information is carried in an NDP CMAC PPDU body field of the NDP frame, and the second information is used to indicate that the first PPDU frame includes the first information.

In some embodiments, the second information is carried in an NDP CMAC PPDU Type field of the NDP CMAC PPDU body field.

In some embodiments, the first information is used to indicate one or more of the following of the first signal: a time domain position, a frequency domain position, or a type.

In some embodiments, the time domain position includes one or more of the following of the first signal: a start position of a time domain, an end position of a time domain, or duration; and/or, the frequency domain position includes a frequency of the first signal and/or a bandwidth occupied by the first signal.

In some embodiments, the first PPDU frame includes the first signal.

In some embodiments, the first signal is a carrier signal in the backscatter communication.

In some embodiments, the carrier signal is used to transmit feedback information corresponding to the first PPDU frame.

In some embodiments, the first signal is an energy supply signal of the first device.

In some embodiments, energy provided by the first signal for the first device is used to support receiving of a data part in the first PPDU frame.

In some embodiments, the second device is an AP or a STA.

In some embodiments, the first PPDU frame is a control frame, a management frame, or a data frame.

In some embodiments, the first PPDU frame is an NDP frame.

FIG. 21 is a schematic structural diagram of a communications apparatus according to an embodiment of this application. The apparatus shown in FIG. 21 may be the second device described above. As shown in FIG. 21, the apparatus 2100 includes a transmitting unit 2110.

The transmitting unit 2110 is configured to transmit a first PPDU frame to a first device, where at least a part of the first PPDU frame corresponds to a first signal, and the first signal is a signal used for backscatter communication.

In some embodiments, the first PPDU frame includes first information, and the first information is used to indicate the first signal.

In some embodiments, the first information is carried in a physical layer related field of the first PPDU frame.

In some embodiments, the first information is carried in a physical layer header field of the physical layer related field.

In some embodiments, the first PPDU frame is an NDP frame, a physical layer header field of the NDP frame includes an NDP CMAC PPDU body field, and the first information is carried in the NDP CMAC PPDU body field.

In some embodiments, the physical layer header field is a signal field.

In some embodiments, the first information is carried in a physical layer preamble field of the physical layer related field.

In some embodiments, the preamble field includes a preamble sequence, and the preamble sequence has a value corresponding to the first information.

In some embodiments, the first information is carried in a MAC layer related field of the first PPDU frame.

In some embodiments, the first information is carried in a MAC header field or a frame body field of the MAC layer related field.

In some embodiments, the first PPDU frame includes second information, and the second information is used to indicate that the first PPDU frame includes the first information.

In some embodiments, the second information is carried in a MAC header field of the first PPDU frame.

In some embodiments, the second information is carried in a type field and/or a subtype field of the MAC header field.

In some embodiments, the first PPDU frame is a control frame, the second information is carried in the subtype field, the subtype field has a target value, and the target value corresponds to the second information.

In some embodiments, the target value is any value ranging from 0000 to 0010.

In some embodiments, the first PPDU frame is an NDP frame, the NDP frame includes second information, the second information is carried in an NDP CMAC PPDU body field of the NDP frame, and the second information is used to indicate that the first PPDU frame includes the first information.

In some embodiments, the second information is carried in an NDP CMAC PPDU Type field of the NDP CMAC PPDU body field.

In some embodiments, the first information is used to indicate one or more of the following of the first signal: a time domain position, a frequency domain position, or a type.

In some embodiments, the time domain position includes one or more of the following of the first signal: a start position of a time domain, an end position of a time domain, or duration; and/or, the frequency domain position includes a frequency of the first signal and/or a bandwidth occupied by the first signal.

In some embodiments, the first PPDU frame includes the first signal.

In some embodiments, the first signal is a carrier signal in the backscatter communication.

In some embodiments, the carrier signal is used to transmit feedback information corresponding to the first PPDU frame.

In some embodiments, the first signal is an energy supply signal of the first device.

In some embodiments, energy provided by the first signal for the first device is used to support receiving of a data part in the first PPDU frame.

In some embodiments, the second device is an AP or a STA.

In some embodiments, the first PPDU frame is a control frame, a management frame, or a data frame.

In some embodiments, the first PPDU frame is an NDP frame.

FIG. 22 is a schematic structural diagram of an apparatus according to an embodiment of this application. The dashed lines in FIG. 22 indicate that the unit or module is optional. The apparatus 2200 may be configured to implement the methods described in the foregoing method embodiments. The apparatus 2200 may be a chip or a communications apparatus. For example, the apparatus 2200 may be the first device or the second device described above. Optionally, the apparatus 2200 may be a zero-power terminal.

The apparatus 2200 may include one or more processors 2210. The processor 2210 may support the apparatus 2200 to implement the method described in the foregoing method embodiments. The processor 2210 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2200 may further include one or more memories 2220. The memory 2220 stores a program, where the program may be executed by the processor 2210, to cause the processor 2210 to execute the methods described in the foregoing method embodiments. The memory 2220 may be independent of the processor 2210 or may be integrated into the processor 2210.

The apparatus 2200 may further include a transceiver 2230. The processor 2210 may communicate with another device or chip through the transceiver 2230. For example, the processor 2210 may transmit data to and receive data from another device or chip through the transceiver 2230. The transceiver 2230 may perform backscatter communication, for example, the transceiver 2230 may be implemented by a zero-power circuit.

The apparatus 2200 may further include an energy harvesting module, configured to harvest energy of a spatial electromagnetic wave, to provide energy for the apparatus 2200. For example, the transceiver 2230 receives an energy supply signal, and the energy harvesting module may harvest energy based on the energy supply signal, to drive a load circuit in the apparatus 2200.

An embodiment of this application further provides a computer-readable storage medium, configured to store a program. The computer-readable storage medium may be applied to a communications apparatus provided in embodiments of this application, and the program causes a computer to execute a method to be executed by the communications apparatus in various embodiments of this application.

An embodiment of this application further provides a computer program product. The computer program product includes a program. The computer program product may be applied to a communications apparatus provided in embodiments of this application, and the program causes a computer to execute a method to be executed by the communications apparatus in various embodiments of this application.

An embodiment of this application further provides a computer program. The computer program may be applied to a communications apparatus provided in embodiments of this application, and the computer program causes a computer to execute a method to be executed by the communications apparatus in various embodiments of this application.

It should be understood that, in embodiments of this application, "B that corresponds to A" means that B is associated with A, and B may be determined based on A. However, it should also be understood that, determining B based on A does not mean determining B based only on A; instead, B may be determined based on A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented through some interfaces. The indirect couplings or communication connections between apparatuses or units may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented through software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
Receiving, by a first device, a first physical layer protocol data unit PPDU frame from a second device, wherein at least a part of the first PPDU frame corresponds to a first signal, and the first signal is a signal used for backscatter communication.

2. The method according to claim 1, wherein the first PPDU frame comprises first information, and the first information is used to indicate the first signal.

3. The method according to claim 2, wherein the first information is carried in a physical layer related field of the first PPDU frame.

4. The method according to claim 3, wherein the first information is carried in a physical layer header field of the physical layer related field.

5. The method according to claim 4, wherein the first PPDU frame is a null data packet NDP frame, a physical layer header field of the NDP frame comprises an NDP CMAC PPDU body field, and the first information is carried in the NDP CMAC PPDU body field.

6. The method according to claim 4 or 5, wherein the physical layer header field is a signal field.

7. The method according to claim 3, wherein the first information is carried in a physical layer preamble field of the physical layer related field.

8. The method according to claim 7, wherein the preamble field comprises a preamble sequence, and the preamble sequence has a value corresponding to the first information.

9. The method according to claim 2, wherein the first information is carried in a medium access control MAC layer related field of the first PPDU frame.

10. The method according to claim 9, wherein the first information is carried in a MAC header field or a frame body field of the MAC layer related field.

11. The method according to any one of claims 2 to 10, wherein the first PPDU frame comprises second information, and the second information is used to indicate that the first PPDU frame comprises the first information.

12. The method according to claim 11, wherein the second information is carried in a MAC header field of the first PPDU frame.

13. The method according to claim 12, wherein the second information is carried in a type field and/or a subtype field of the MAC header field.

14. The method according to claim 13, wherein the first PPDU frame is a control frame, the second information is carried in the subtype field, the subtype field has a target value, and the target value corresponds to the second information.

15. The method according to claim 14, wherein the target value is any value ranging from 0000 to 0010.

16. The method according to claims 2 to 8, wherein the first PPDU frame is an NDP frame, the NDP frame comprises second information, the second information is carried in an NDP CMAC PPDU body field of the NDP frame, and the second information is used to indicate that the first PPDU frame comprises the first information.

17. The method according to claim 16, wherein the second information is carried in an NDP CMAC PPDU Type field of the NDP CMAC PPDU body field.

18. The method according to any one of claims 2 to 17, wherein the first information is used to indicate one or more of following of the first signal: a time domain position, a frequency domain position, or a type.

19. The method according to claim 18, wherein the time domain position comprises one or more of following of the first signal: a start position of a time domain, an end position of a time domain, or duration; and/or, the frequency domain position comprises a frequency of the first signal and/or a bandwidth occupied by the first signal.

20. The method according to any one of claims 1 to 19, wherein the first PPDU frame comprises the first signal.

21. The method according to any one of claims 1 to 20, wherein the first signal is a carrier signal in the backscatter communication.

22. The method according to claim 21, wherein the carrier signal is used to transmit feedback information corresponding to the first PPDU frame.

23. The method according to any one of claims 1 to 22, wherein the first signal is an energy supply signal of the first device.

24. The method according to claim 23, wherein energy provided by the first signal for the first device is used to support receiving of a data part in the first PPDU frame.

25. The method according to any one of claims 1 to 24, wherein the second device is an AP or a STA.

26. The method according to any one of claims 1 to 4, claims 7 to 15, or claims 18 to 25, wherein the first PPDU frame is a control frame, a management frame, or a data frame.

27. The method according to any one of claims 1 to 8 or claims 11 to 25, wherein the first PPDU frame is an NDP frame.

28. A wireless communication method, comprising:
transmitting, by a second device, a first physical layer protocol data unit PPDU frame to a first device, wherein at least a part of the first PPDU frame corresponds to a first signal, and the first signal is a signal used for backscatter communication.

29. The method according to claim 28, wherein the first PPDU frame comprises first information, and the first information is used to indicate the first signal.

30. The method according to claim 29, wherein the first information is carried in a physical layer related field of the first PPDU frame.

31. The method according to claim 30, wherein the first information is carried in a physical layer header field of the physical layer related field.

32. The method according to claim 31, wherein the first PPDU frame is a null data packet NDP frame, a physical layer header field of the NDP frame comprises an NDP CMAC PPDU body field, and the first information is carried in the NDP CMAC PPDU body field.

33. The method according to claim 31 or 32, wherein the physical layer header field is a signal field.

34. The method according to claim 30, wherein the first information is carried in a physical layer preamble field of the physical layer related field.

35. The method according to claim 34, wherein the preamble field comprises a preamble sequence, and the preamble sequence has a value corresponding to the first information.

36. The method according to claim 29, wherein the first information is carried in a medium access control MAC layer related field of the first PPDU frame.

37. The method according to claim 36, wherein the first information is carried in a MAC header field or a frame body field of the MAC layer related field.

38. The method according to any one of claims 29 to 37, wherein the first PPDU frame comprises second information, and the second information is used to indicate that the first PPDU frame comprises the first information.

39. The method according to claim 38, wherein the second information is carried in a MAC header field of the first PPDU frame.

40. The method according to claim 39, wherein the second information is carried in a type field and/or a subtype field of the MAC header field.

41. The method according to claim 40, wherein the first PPDU frame is a control frame, the second information is carried in the subtype field, the subtype field has a target value, and the target value corresponds to the second information.

42. The method according to claim 41, wherein the target value is any value ranging from 0000 to 0010.

43. The method according to claims 29 to 35, wherein the first PPDU frame is an NDP frame, the NDP frame comprises second information, the second information is carried in an NDP CMAC PPDU body field of the NDP frame, and the second information is used to indicate that the first PPDU frame comprises the first information.

44. The method according to claim 43, wherein the second information is carried in an NDP CMAC PPDU Type field of the NDP CMAC PPDU body field.

45. The method according to any one of claims 29 to 44, wherein the first information is used to indicate one or more of following of the first signal: a time domain position, a frequency domain position, or a type.

46. The method according to claim 45, wherein the time domain position comprises one or more of following of the first signal: a start position of a time domain, an end position of a time domain, or duration; and/or, the frequency domain position comprises a frequency of the first signal and/or a bandwidth occupied by the first signal.

47. The method according to any one of claims 28 to 46, wherein the first PPDU frame comprises the first signal.

48. The method according to any one of claims 28 to 47, wherein the first signal is a carrier signal in the backscatter communication.

49. The method according to claim 48, wherein the carrier signal is used to transmit feedback information corresponding to the first PPDU frame.

50. The method according to any one of claims 28 to 49, wherein the first signal is an energy supply signal of the first device.

51. The method according to claim 50, wherein energy provided by the first signal for the first device is used to support receiving of a data part in the first PPDU frame.

52. The method according to any one of claims 28 to 51, wherein the second device is an AP or a STA.

53. The method according to any one of claims 28 to 31, claims 34 to 42, or claims 45 to 52, wherein the first PPDU frame is a control frame, a management frame, or a data frame.

54. The method according to any one of claims 28 to 35 or claims 38 to 52, wherein the first PPDU frame is an NDP frame.

55. A wireless communications apparatus, wherein the apparatus is a first device, and the apparatus comprises:
a receiving unit, configured to receive a first physical layer protocol data unit PPDU frame from a second device, wherein at least a part of the first PPDU frame corresponds to a first signal, and the first signal is a signal used for backscatter communication.

56. The apparatus according to claim 55, wherein the first PPDU frame comprises first information, and the first information is used to indicate the first signal.

57. The apparatus according to claim 56, wherein the first information is carried in a physical layer related field of the first PPDU frame.

58. The apparatus according to claim 57, wherein the first information is carried in a physical layer header field of the physical layer related field.

59. The apparatus according to claim 58, wherein the first PPDU frame is a null data packet NDP frame, a physical layer header field of the NDP frame comprises an NDP CMAC PPDU body field, and the first information is carried in the NDP CMAC PPDU body field.

60. The apparatus according to claim 58 or 59, wherein the physical layer header field is a signal field.

61. The apparatus according to claim 57, wherein the first information is carried in a physical layer preamble field of the physical layer related field.

62. The apparatus according to claim 61, wherein the preamble field comprises a preamble sequence, and the preamble sequence has a value corresponding to the first information.

63. The apparatus according to claim 56, wherein the first information is carried in a medium access control MAC layer related field of the first PPDU frame.

64. The apparatus according to claim 63, wherein the first information is carried in a MAC header field or a frame body field of the MAC layer related field.

65. The apparatus according to any one of claims 56 to 64, wherein the first PPDU frame comprises second information, and the second information is used to indicate that the first PPDU frame comprises the first information.

66. The apparatus according to claim 65, wherein the second information is carried in a MAC header field of the first PPDU frame.

67. The apparatus according to claim 66, wherein the second information is carried in a type field and/or a subtype field of the MAC header field.

68. The apparatus according to claim 67, wherein the first PPDU frame is a control frame, the second information is carried in the subtype field, the subtype field has a target value, and the target value corresponds to the second information.

69. The apparatus according to claim 68, wherein the target value is any value ranging from 0000 to 0010.

70. The apparatus according to claims 56 to 62, wherein the first PPDU frame is an NDP frame, the NDP frame comprises second information, the second information is carried in an NDP CMAC PPDU body field of the NDP frame, and the second information is used to indicate that the first PPDU frame comprises the first information.

71. The apparatus according to claim 70, wherein the second information is carried in an NDP CMAC PPDU Type field of the NDP CMAC PPDU body field.

72. The apparatus according to any one of claims 56 to 71, wherein the first information is used to indicate one or more of following of the first signal: a time domain position, a frequency domain position, or a type.

73. The apparatus according to claim 72, wherein the time domain position comprises one or more of following of the first signal: a start position of a time domain, an end position of a time domain, or duration; and/or, the frequency domain position comprises a frequency of the first signal and/or a bandwidth occupied by the first signal.

74. The apparatus according to any one of claims 55 to 73, wherein the first PPDU frame comprises the first signal.

75. The apparatus according to any one of claims 55 to 74, wherein the first signal is a carrier signal in the backscatter communication.

76. The apparatus according to claim 75, wherein the carrier signal is used to transmit feedback information corresponding to the first PPDU frame.

77. The apparatus according to any one of claims 55 to 76, wherein the first signal is an energy supply signal of the first device.

78. The apparatus according to claim 77, wherein energy provided by the first signal for the first device is used to support receiving of a data part in the first PPDU frame.

79. The apparatus according to any one of claims 55 to 78, wherein the second device is an AP or a STA.

80. The apparatus according to any one of claims 55 to 58, claims 61 to 69, or claims 72 to 79, wherein the first PPDU frame is a control frame, a management frame, or a data frame.

81. The apparatus according to any one of claims 55 to 62 or claims 65 to 79, wherein the first PPDU frame is an NDP frame.

82. A wireless communications apparatus, wherein the apparatus is a second device, and the apparatus comprises:
a transmitting unit, configured to transmit a first physical layer protocol data unit PPDU frame to a first device, wherein at least a part of the first PPDU frame corresponds to a first signal, and the first signal is a signal used for backscatter communication.

83. The apparatus according to claim 82, wherein the first PPDU frame comprises first information, and the first information is used to indicate the first signal.

84. The apparatus according to claim 83, wherein the first information is carried in a physical layer related field of the first PPDU frame.

85. The apparatus according to claim 84, wherein the first information is carried in a physical layer header field of the physical layer related field.

86. The apparatus according to claim 85, wherein the first PPDU frame is a null data packet NDP frame, a physical layer header field of the NDP frame comprises an NDP CMAC PPDU body field, and the first information is carried in the NDP CMAC PPDU body field.

87. The apparatus according to claim 85 or 86, wherein the physical layer header field is a signal field.

88. The apparatus according to claim 84, wherein the first information is carried in a physical layer preamble field of the physical layer related field.

89. The apparatus according to claim 88, wherein the preamble field comprises a preamble sequence, and the preamble sequence has a value corresponding to the first information.

90. The apparatus according to claim 83, wherein the first information is carried in a medium access control MAC layer related field of the first PPDU frame.

91. The apparatus according to claim 90, wherein the first information is carried in a MAC header field or a frame body field of the MAC layer related field.

92. The apparatus according to any one of claims 83 to 91, wherein the first PPDU frame comprises second information, and the second information is used to indicate that the first PPDU frame comprises the first information.

93. The apparatus according to claim 92, wherein the second information is carried in a MAC header field of the first PPDU frame.

94. The apparatus according to claim 93, wherein the second information is carried in a type field and/or a subtype field of the MAC header field.

95. The apparatus according to claim 94, wherein the first PPDU frame is a control frame, the second information is carried in the subtype field, the subtype field has a target value, and the target value corresponds to the second information.

96. The apparatus according to claim 95, wherein the target value is any value ranging from 0000 to 0010.

97. The apparatus according to claims 83 to 89, wherein the first PPDU frame is an NDP frame, the NDP frame comprises second information, the second information is carried in an NDP CMAC PPDU body field of the NDP frame, and the second information is used to indicate that the first PPDU frame comprises the first information.

98. The apparatus according to claim 97, wherein the second information is carried in an NDP CMAC PPDU Type field of the NDP CMAC PPDU body field.

99. The apparatus according to any one of claims 83 to 98, wherein the first information is used to indicate one or more of following of the first signal: a time domain position, a frequency domain position, or a type.

100. The apparatus according to claim 99, wherein the time domain position comprises one or more of following of the first signal: a start position of a time domain, an end position of a time domain, or duration; and/or, the frequency domain position comprises a frequency of the first signal and/or a bandwidth occupied by the first signal.

101. The apparatus according to any one of claims 82 to 100, wherein the first PPDU frame comprises the first signal.

102. The apparatus according to any one of claims 82 to 101, wherein the first signal is a carrier signal in the backscatter communication.

103. The apparatus according to claim 102, wherein the carrier signal is used to transmit feedback information corresponding to the first PPDU frame.

104. The apparatus according to any one of claims 82 to 103, wherein the first signal is an energy supply signal of the first device.

105. The apparatus according to claim 104, wherein energy provided by the first signal for the first device is used to support receiving of a data part in the first PPDU frame.

106. The apparatus according to any one of claims 82 to 105, wherein the second device is an AP or a STA.

107. The apparatus according to any one of claims 82 to 85, claims 88 to 96, or claims 99 to 106, wherein the first PPDU frame is a control frame, a management frame, or a data frame.

108. The apparatus according to any one of claims 82 to 89 or claims 92 to 106, wherein the first PPDU frame is an NDP frame.

109. A communications apparatus, comprising a memory, a transceiver, and a processor, wherein the memory is configured to store a program, the processor performs data transmission and receiving through the transceiver, and the processor is configured to invoke the program in the memory to execute the method according to any one of claims 1 to 27.

110. A communications apparatus, comprising a memory, a transceiver, and a processor, wherein the memory is configured to store a program, the processor performs data transmission and receiving through the transceiver, and the processor is configured to invoke the program in the memory to execute the method according to any one of claims 28 to 54.

111. A communications apparatus, comprising a processor configured to invoke a program from a memory to execute the method according to any one of claims 1 to 27.

112. A communications apparatus, comprising a processor configured to invoke a program from a memory to execute the method according to any one of claims 28 to 54.

113. A chip, comprising a processor configured to invoke a program from a memory to cause a device on which the chip is installed to execute the method according to any one of claims 1 to 27.

114. A chip, comprising a processor configured to invoke a program from a memory to cause a device on which the chip is installed to execute the method according to any one of claims 28 to 54.

115. A computer-readable storage medium, wherein the computer-readable storage medium stores a program, and the program causes a computer to execute the method according to any one of claims 1 to 27.

116. A computer-readable storage medium, wherein the computer-readable storage medium stores a program, and the program causes a computer to execute the method according to any one of claims 28 to 54.

117. A computer program product, comprising a program, wherein the program causes a computer to execute the method according to any one of claims 1 to 27.

118. A computer program product, comprising a program, wherein the program causes a computer to execute the method according to any one of claims 28 to 54.

119. A computer program, wherein the computer program causes a computer to execute the method according to any one of claims 1 to 27.

120. A computer program, wherein the computer program causes a computer to execute the method according to any one of claims 28 to 54.
